# EUROPEAN PATENT SPECIFICATION

(11) **EP 4 485 037 B1**
(45) Date of publication and mention of the grant of the patent: **14.10.2026**
(21) Application number: 23382669.2
(22) Date of filing: 29.06.2023
(51) Int. Cl.: G02B 21/14, G02B 21/00, G01N 21/21

(54) **APPARATUS FOR OPTICAL IMAGING**
VORRICHTUNG ZUR OPTISCHEN ABBILDUNG
APPAREIL D'IMAGERIE OPTIQUE

(43) Date of publication of application: 01.01.2025
(73) Proprietor: Fundació Institut de Ciències Fotòniques, 08860 Castelldefels (Barcelona) (ES); Institució Catalana De Recerca I Estudis Avançats (ICREA), 08010 Barcelona (ES)
(72) Inventor: PRUNERI, Valerio, Barcelona (ES); TERBORG, Roland Alfonso, Barcelona (ES); HAEGELE, Sebastian, Barcelona (ES); DUEMPELMANN, Luc, Barcelona (ES)
(74) Representative: Grünecker Patent- und Rechtsanwälte PartG mbB

(56) References cited:
- KR-B1- 102 132 559
- MU T ET AL: "Principle and analysis of a polarization imaging spectometer", APPLIED OPTICS, OPTICAL SOCIETY OF AMERICA, WASHINGTON, DC, US, vol. 48, no. 12, 20 April 2009 (2009-04-20), pages 2333 - 2339, XP001522847, ISSN: 0003-6935, DOI: 10.1364/AO.48.002333
- LUIS A. ALEMÁN-CASTANEDA ET AL: "Shearing interferometry via geometric phase", OPTICA, vol. 6, no. 4, 20 April 2019 (2019-04-20), pages 396, XP055644988, DOI: 10.1364/OPTICA.6.000396
- BELKNER JOHANNES ET AL: "Novel chromatic confocal differential interference contrast prototype", SPIE PROCEEDINGS; [PROCEEDINGS OF SPIE ISSN 0277-786X], SPIE, US, vol. 11056, 21 June 2019 (2019-06-21), pages 1105611 - 1105611, XP060122671, ISBN: 978-1-5106-3673-6, DOI: 10.1117/12.2527854
- TINGKUI MU ET AL: "Static dual-channel polarization imaging spectrometer for simultaneous acquisition of inphase and antiphase interference images;Static dual-channel PIS for simultaneous acquisition of inphase and antiphase interference images", MEASUREMENT SCIENCE AND TECHNOLOGY, IOP, BRISTOL, GB, vol. 22, no. 10, 19 August 2011 (2011-08-19), pages 105302, XP020211913, ISSN: 0957-0233, DOI: 10.1088/0957-0233/22/10/105302
- CRAVEN-JONES JULIA ET AL: "Tunable interference contrast using a variable Wollaston prism", OPTICAL ENGINEERING, SOC. OF PHOTO-OPTICAL INSTRUMENTATION ENGINEERS, BELLINGHAM, vol. 51, no. 1, 1 January 2012 (2012-01-01), pages 13002, XP060145517, ISSN: 0091-3286, [retrieved on 20120119], DOI: 10.1117/1.OE.51.1.013002

## Description

### Field of Invention

The present invention relates to an optical system comprising apparatus for optical imaging of a sample, in particular, a living organism.

### Background of the invention

Detecting and analyzing micro-organisms is of importance in a variety of technical fields. Pulse-amplitude-modulation (PAM) fluorometers, flow cytometers and optical microscopy techniques are widely used in combination with fluorescence labeling for the analysis of biological micro-organisms (microalgae, bacteria, etc...).

In bio-sensing, objects of interest like biological cells and protein layers are highly transparent. Therefore, they are usually detected indirectly using external light emitting fluorescent labels, or directly using an interferometric scheme to measure the phase shifts experienced by light as it travels through them. Fluorescent techniques allow for obtaining high contrast images but can easily compromise health of the cells under investigation, thereby, leading to wrong results for in-vitro toxicity and drug development studies.

An apparatus implementing an interferometric scheme is known from US 8,472,031 B2 which uses two sheared and quasi-overlapped illuminating beams experiencing relative phase shifts (that translate to intensities of the detected light) when propagating through the object under investigation, and an image sensor array to record the resulting interference pattern. A disadvantage of this known apparatus is its limited spatial resolution, which is linked to the fact that there are no imaging elements and the free-space propagation limits the lateral image resolution due to diffraction. Furthermore, this apparatus is not compatible with standard microscopes.

MU T ET AL: "Principle and analysis of a polarization imaging spectometer", APPLIED OPTICS, OPTICAL SOCIETY OF AMERICA, WASHINGTON, DC, US, vol. 48, no. 12, 20 April 2009 (2009-04-20), pages 2333 - 2339, disclose a modified Savart polariscope comprising a polarizer, a birefringent device with a moving wedge prism, an analyzer/polarizer and a CCD device arranged along an optical axis in the given order.

LUIS A. ALEMN-CASTANEDA ET AL: "Shearing interferometry via geometric phase", OPTICA, vol. 6, no. 4, 20 April 2019 (2019-04-20), pages 396 - 399, disclose a geometric phase shearing interferometer comprising a polarizer, a birefringent device in form of spatially varying axis birefringent plates, an analyzer and a CMOS device arranged along an optical axis in the given order.

BELKNER JOHANNES ET AL: "Novel chromatic confocal differential interference contrast prototype", SPIE PROCEEDINGS; [PROCEEDINGS OF SPIE ISSN 0277-786X], SPIE, US, vol. 11056, 21 June 2019 (2019-06-21), pages 1105611 - 1105611, disclose a chromatic confocal differential interference contrast device comprising an architecture that is different from the claimed configuration and can only provide 2D images by scanning of individual samples points.

TINGKUI MU ET AL: "Static dual-channel polarization imaging spectrometer for simultaneous acquisition of inphase and antiphase interference images;Static dual-channel PIS for simultaneous acquisition of inphase and antiphase interference images", MEASUREMENT SCIENCE AND TECHNOLOGY, IOP, BRISTOL, GB, vol. 22, no. 10, 19 August 2011 (2011-08-19), pages 105302, disclose a dual-channel polarization imaging spectrometer comprising a polarizer, a Wollaston prism, a Savart plate and a CCD device arranged along an optical axis in the given order.

CRAVEN-JONES JULIA ET AL: "Tunable interference contrast using a variable Wollaston prism", OPTICAL ENGINEERING, SOC. OF PHOTO-OPTICAL INSTRUMENTATION ENGINEERS, BELLINGHAM, vol. 51, no. 1, 1 January 2012 (2012-01-01), pages 13002-1 - 13002-7, disclose an imaging Fourier transform spectrometer comprising a polarizer, two Wollaston prisms, and another polarizer arranged along an optical axis in the given order.

KR 102132559 B1 discloses a device comprising an optical module with a light source and a linear polarizer, a first beam splitter that reflects some of the light emitted from the optical module and makes it incident on a measurement object having a free curved surface, a second beam splitter for dividing the light reflected from the measurement object into reflected to a first interferometer and light transmitted to a second interferometer wherein each of the interferometers comprises a birefringent unit, a quarter waveplate and a polarization camera.

An improved apparatus that also makes use of splitting an illuminating light beam into a pair of sheared and quasi-overlapped illuminating beams is taught in US 2021/0364432 A1. The phase sensitivity is increased, however, even this kind of apparatus shows a relatively low image resolution and it is not compatible with standard microscopes.

It is, therefore, an object of the present invention to provide an apparatus for optical imaging of a sample, in particular, a sample of one or more micro-organisms, that alleviates the above-mentioned problems and, particularly, allows for accurately and quantitatively measuring and analyzing a plurality of biological parameters from a sample comprising micro-organisms.

### Description of the Invention

The present invention addresses the above-mentioned object by providing an optical system comprising (i) an apparatus for optical imaging of a sample, the apparatus comprising a first polarizing device configured for linearly polarizing a first light beam coming (b) from the sample to obtain first linearly polarized light; a first birefringent device, in particular, a first Savart plate, configured for splitting the first linearly polarized light obtained by the first polarizing device into a first pair of sheared light beams; and a first image sensor device configured for detecting the first pair of sheared light beams obtained by the first birefringent device to obtain a phase image of the sample; and ii) a microscope (M), comprising a light source configured for emitting light through the sample to obtain the first light beam (b).

The sample may be a fully or partially transparent sample or a fully or partially reflective sample and may be partially absorptive. The sample may be positioned in the microscope, on a sample carrier, for example, a microscope slide. For instance, the sample may be a biological sample, such as one or more biological cells and/or one or more protein layers. In principle, the sample may be solid, liquid or gaseous. A medium surrounding or embedding the sample may also be solid, liquid or gaseous. For instance, the sample may be a solid material dispersed in a liquid or gas. The first light beam comprises all information on the sample and it may be a light beam transmitted through the sample or a light beam reflected by the sample.

The first birefringent device may be a Savart plate. A Savart plate is composed of two birefringent crystals (or glasses or polymer materials, for example) which act differently on differently polarized components of the light beam and, thus, the Savart plate splits the first light beam into the two (for example, co-propagating and partially overlapping) sheared beams (cf. description in US 8,472,031 B2 and R. Terborg et al., entitled "Ultrasensitive interferometric on-chip microscopy of transparent objects", Science Advances 2016; 2: e1600077, 10 June 2016). The use of the Savart plate is advantageous since the two sheared beams can be the replica of each other and thus possess the same optical parameters. The latter is important for making precise measurements of the optical property. The birefringent element may alternatively be a single plate of a birefringent crystal. Effectively, the sheared beams may form a common path interferometer, which can be used to accurately detect the phase differences between any two points of the sample separated by the shear distance.

The sheared light beams may be quasi-overlapping in the sense that the sheared light beams partially overlap and further comprise non-overlapping areas. The shear distance, which corresponds to the offset between the two sheared light beams, may be adapted to the anticipated size of the structures of the sample. For bio-sensing applications, the shear distance may, for instance, be between 10 and 100 µm. The shear distance may particularly be chosen based on the following considerations: it should be larger than the smallest features of the image that can or should be resolved, larger than the pixel size of the detector, and/or for light sources providing illumination light (see below) with low coherence it should be small enough such that two points separated by the shear distance give a good interferometric signal.

In the case that the temporal coherence provided by a light source providing illumination light is too low for interferometric measurements, a spectral filter can be used for filtering the first light beams, for example, before linearly polarizing the same by means of the first polarizing device.

The first birefringent device can be tiltable with respect to a plane perpendicular to the direction of propagation of the first light beam. In this way, it is possible to introduce a variable phase shift between the two sheared beams. This variable phase shift can be used to perform a phase-shifting interferometric analysis of the sample and to further enhance the sensitivity of the apparatus. Interferograms at several tilting angles may be captured to obtain a quantitative final phase image with high quality. The first birefringent device may be the only birefringent device of the apparatus according to the first aspect and embodiments thereof.

In order to enhance sensitivity a quarter waveplate may be arranged between the first birefringent device and the first image sensor device.

The first image sensor device may comprise an image sensor array for detecting the first pair of sheared light beams in a spatially resolved manner. The first image sensor device may be a charge-coupled device (CCD) or a complementary metal-oxide-semiconductor (CMOS, sCMOS, eeCMOS) detector, a sensitive photomultiplier detector, an avalanche photodiode (APD), a single-photon avalanche diode array detector (SPAD) or a photon counter (e.g. multi-pixel photon counter) may be used as or comprised by the first image sensor. The first pair of sheared light beams may directly hit the first image sensor device such that no imaging optics, such as lenses, are needed.

Data processing means for analyzing image data provided by the first image sensor device may be provided. The apparatus for optical imaging may comprise a data processing device and algorithms for extracting parameters of the detected optical images. Interferograms obtained with the first image sensor can be analyzed by phase-shifting and deconvolution algorithms.

The thus provided optical system as well as embodiments of the same described below provide for high contrast imaging, particularly, high contrast imaging of biological cells without fluorescent labelling, high resolution quantitative 2D and 3D phase imaging, and highly stable data acquisition at high image acquisition speeds. In principle, the apparatus can operate together with any light source illuminating the sample. Industrial applications of the apparatus for optical imaging provided herein comprise life science industry segments such as live-cell imaging, toxicology and regenerative medicine, among others.

In alternative embodiments, a) the apparatus for optical imaging of the optical system according to the first aspect further comprises a second polarizing device (different from the first polarizing device) configured for linearly polarizing the first pair of sheared light beams obtained by the first birefringent device before detection by the first image sensor device or b) the first image sensor device of that apparatus is a first polarization image sensor device/array comprising a first polarizing component configured for polarizing the first pair of sheared light beams obtained by the first birefringent device. The second polarizing device may be orientated to exhibit a polarization plane perpendicular or parallel to the polarization plane of the first polarizing device. A polarization image sensor device/array is more complicated and expensive than an image sensor device without polarizers but it, advantageously, allows for faster phase measurements since polarization can be changed without manual adjustment of a polarizer.

The first image sensor device can be arranged directly behind the second polarizing device without further optical components therebetween and the first polarization image sensor device can be arranged directly behind the first birefringent device without further optical components therebetween.

In operation, after obtaining a first phase image by means of the apparatus of the optical system according to one of the above-described alternative embodiments according to the first aspect, the first birefringent device or the entire configuration consisting of the first polarizing device, first birefringent device and either a) the second polarizing device and the first image sensor device or b) the first polarization image sensor device may be rotated around the beam propagation axis by an angle of, for example, ±90°, and a new measurement with this configuration can be used to obtain a second phase image. Based on the first and second phase images a final quantitative phase image without differential (double image) effect from which solutions of the prior art suffer (particularly, in the context of investigating semi-transparent or transparent biological cells) and with a particularly high contrast can be obtained.

It is provided a method of imaging a sample using the optical system according to the first aspect or embodiments thereof. This method comprises linearly polarizing a first light beam coming from the sample to obtain first linearly polarized light, splitting the first linearly polarized light obtained by the first polarizing device into a first pair of sheared light beams by means of a first birefringent device, in particular, a first Savart plate, and detecting the first pair of sheared light by a first image sensor device.

This method may comprise obtaining a first phase image for a first orientation of the first birefringent device or the entire configuration consisting of the first polarizing device, first birefringent device and either a) the second polarizing device and the first image sensor device or b) the first polarization image sensor device and obtaining a second phase image for a second orientation of the first birefringent device or the entire configuration consisting of the first polarizing device, first birefringent device and either a) the second polarizing device and the first image sensor device or b) the first polarization image sensor device wherein the second orientation is rotated around the beam propagation axis by an angle of, for example, ±90°, with respect to the first orientation and obtaining a final phase image based on the first and second images. This method can be extended to obtaining a final phase image based on two or more phase images from different orientations that are not necessarily orthogonal to each other. According to a second aspect, each of the above-described examples of an apparatus of optical imaging of the optical system further comprises a beam splitting device configured for splitting (non-polarized) light coming from the sample into the first light beam and a second light beam, a third polarizing device configured for linearly polarizing the second light beam to obtain second linearly polarized light, a second birefringent device (different from the first birefringent device and, for example, a Savart plate), configured for splitting the second linearly polarized light obtained by the third polarizing device (different from the first and second polarizing devices) into a second pair of sheared light beams (different from the first pair of sheared light beams) and a second image sensor device (different from the first image sensor device) configured for detecting the second pair of sheared light beams obtained by the second birefringent device.

The second birefringent device may be orientated with respect to the first birefringent device in a way that the two birefringent devices produce different shears of the first and second pairs of sheared light beams, respectively. For example, the first birefringent device may be configured/arranged in order to produce a horizontal shear and the second birefringent device may be configured/arranged to produce a vertical shear or a horizontal shear with a different shear distance as compared to the shear produced by the first birefringent device. The first and second birefringent devices may be tilted with respect to a plane perpendicular to the direction of propagation of the first and second light beams, respectively, to achieve the same effect as that of quarter waveplates, or quarter waveplates may be provided behind (along the direction of beam travel) each of the first and second birefringent devices.

As compared to the embodiments according to alternatives a) and b) of the first aspect described above, the configuration according to this embodiment (although being more complex) allows for obtaining a final quantitative phase image (based on the images simultaneously detected by the first and second image sensor devices) without differential (double image) effect several times faster since no rotation of birefringent devices or entire configurations is needed.

According to the second aspect in alternative embodiments, the apparatus comprising the beam splitting device a) further comprises a fourth polarizing device (different from the first, second and third polarizing devices) configured for polarizing the second pair of sheared light beams obtained by the second birefringent device before detection by the second image sensor device or b) the second image sensor device of that apparatus is a second polarization image sensor device (different from the first polarization image sensor device) comprising a second polarizing component configured for polarizing the second pair of sheared light beams obtained by the second birefringent device.

The configuration according to these embodiments also allows for obtaining a high-quality final quantitative phase image without rotation of birefringent devices or entire configurations.

The second image sensor device can be arranged directly behind the fourth polarizing device without further optical components therebetween and the second polarization image sensor device can be arranged directly behind the second birefringent device without further optical components therebetween.

The first and second birefringent devices may be the only birefringent devices of the apparatus according to the second aspect and embodiments thereof.

According to a third aspect, in the apparatus of the optical system according to the first aspect and embodiments thereof, the first polarizing device is a polarizing beam splitting device configured for splitting light coming from the sample into the first light beam and a second light beam and linearly polarizing the second light beam (as well as the first light beam). This apparatus of the optical system according to the third aspect, that provides the same advantages as the apparatus according to the second aspect and embodiments thereof, further comprises a second birefringent device (different from the first birefringent device) configured for splitting the second linearly polarized light obtained by the polarizing beam splitting device into a second pair of sheared light beams (different from the first pair of sheared light beams) and a second image sensor device (different from the first image sensor device) configured for detecting the second pair of sheared light beams obtained by the second birefringent device.

According to the third aspect in alternative embodiments, a) the apparatus comprising the polarizing beam splitting device further comprises a third polarizing device (different from the first and second polarizing devices) configured for polarizing the second pair of sheared light beams obtained by the second birefringent device before detection by the second image sensor device or b) the second image sensor device of that device is a second polarization image sensor device (different from the first polarization image sensor device) comprising a second polarizing component configured for polarizing the second pair of sheared light beams obtained by the second birefringent device.

The first and second birefringent devices may be the only birefringent devices of the apparatus according to the third aspect and embodiments thereof.

According to a fourth aspect, the apparatus of the optical system according to the first aspect and embodiments thereof further comprises a beam splitting device configured for splitting light coming from the sample into the first light beam (possibly after the light coming from the sample has passed a spectral filter) and a second light beam and a second image sensor device (different from the first image sensor device) configured for detecting the second light beam (that is not linearly polarized and not split into a pair of sheared light beams).

The information obtained by the second image sensor device or the second polarization image sensor device, respectively, can be used together with numerical holographic algorithms to calculate the phase and transmission of the beams in combination with the information provided by the first image sensor device or the first polarization image sensor device, respectively. The configuration according to these embodiments also allows for obtaining a high-quality final quantitative phase image without rotation of birefringent devices or entire configurations.

The optical system may comprise a light source external to the microscope configured for emitting light and another beam splitting device configured for directing the light emitted by the light source external to the microscope towards the sample positioned in the microscope. In this case, the first light beam represents light emitted by the light source external to the microscope and reflected by the sample positioned in the microscope. Thus, by means of this embodiment of the optical system a reflective or semi-reflective sample can be investigated.

The other beam splitting device configured for directing the light emitted by the light source external to the microscope to the sample positioned in the microscope may, for example, be positioned directly ahead (along the direction of beam travel) of the first polarizing device or directly ahead (along the direction of beam travel) of the first (polarization) image sensor device or one of the first and second (polarization) image sensor devices, respectively.

The light source of the optical systems described above may be or comprise a laser, for example, a laser diode or a light emitting diode, LED. Possible wavelengths for LEDs are 490 nm, 530 nm, 625 nm or 810 nm, all with output powers of the order of a few mW. In general, wavelengths from the ultraviolet to the infrared range, in particular, the near- and mid-infrared range, and powers ranging to several watts are possible.

The above-described embodiments of the inventive optical system comprising the apparatus are very suitable for investigating biological cells, in particular, living biological cells. The dynamics of living cells can be determined by in situ growth monitoring of the same using the apparatus or optical system.

Thus, it is provided a method of monitoring living biological cells comprising the steps of providing a sample of the living biological cells, imaging the sample by means of the apparatus of the optical system according to one of the above-described embodiments or the optical system according to one of the above-described embodiments and analyzing one or more biological parameters or qualities or quantities of the biological cells of the sample of interest based on the imaging. The one or more biological parameters or qualities or quantities of interest may include the morphology and/or growth rate and/or nutrient flow and/or changes in concentration of nutrients, etc. The sample can be provided in an incubation chamber. In particular, the entire apparatus according to one of the above-described embodiments or the entire optical system according to one of the above-described embodiments may be located within the incubation chamber.

Other possible applications include analyzing substrates which might be used for cell growth or cell imaging and might be absorptive and/or (semi-)transparent and/or (semi-)reflective. These substrates might be made of a (semi-)transparent material (for example, plastic, or glass) or a (semi-)reflective material (like silicon or metal) and can be coated with some (semi-)transparent material (for example antireflective coatings or transparent electrodes) or coated with a (semi-)reflective material (like metals, for example gold for biocompatibility). The surfaces can be completely homogeneous or contain micro-nano-structures (which might be used for cell support, stimulation or for increasing the imaging performance).

Other possible applications include analyzing the same type of substrates described above without the cell-growth context/application but in general for analysis of materials (for example, optical elements, photonic circuits, transparent electronic devices, etc.).

In both kinds of applications the imaging can reveal details of the surface topography, in particular, surface defects, and can provide for volumetric analysis, detection of embedded structures and embedded defects, material inhomogeneity, mechanical stress or induced birefringence, etc.

Thus, it is provided a method of examining a substrate, in particular, a substrate usable for cell growth or cell imaging, the method comprising the steps of imaging the substrate by means of the apparatus of the optical system according to one of the above-described embodiments or the optical system according to one of the above-described embodiments and analyzing one or more parameters or qualities or quantities of the substrate based on the imaging, wherein the substrate may be made of or comprise at least one of an absorptive, a (semi-)transparent, a (semi-)reflective material and it may be coated with some (semi-)transparent material (for example antireflective coatings or transparent electrodes) or coated with a (semi-)reflective material.

In general, in the above-described methods the analyzing may include phase calculation and removal of double images (see also detailed description below).

In all of the above-described embodiments of the inventive method and the inventive optical system the detected phase images can be processed by artificial intelligence algorithms (for example with machine learning techniques).

Additional features and advantages of the present invention will be described with reference to the drawings. In the description, reference is made to the accompanying figures that are meant to illustrate preferred embodiments of the invention. It is understood that such embodiments do not represent the full scope of the invention.

### Brief description of the drawings

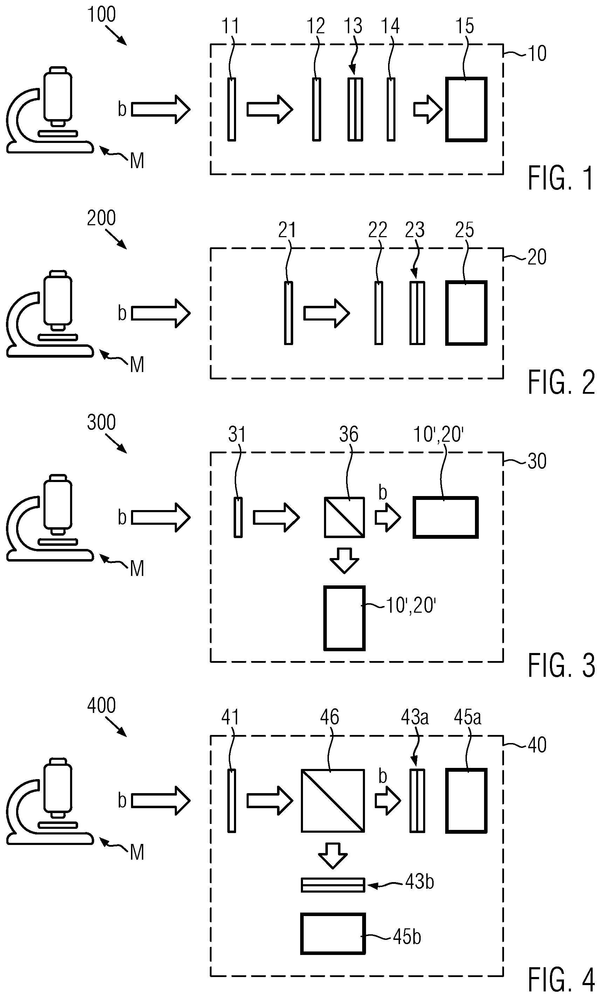

Figure 1 schematically illustrates an optical system comprising a microscope and an apparatus for optical imaging of a, for example, transparent or semi-transparent, sample comprising two polarizing devices, a birefringent device, and an image sensor device in accordance with an exemplary embodiment of the invention.
Figure 2 schematically illustrates an optical system comprising a microscope and an apparatus for optical imaging of a transparent or semi-transparent sample comprising a polarizing device, a birefringent device, and a polarization image sensor device in accordance with an exemplary embodiment of the invention.
Figure 3 schematically illustrates an optical system comprising a microscope and an apparatus for optical imaging of a transparent or semi-transparent sample comprising a beam splitting device, two polarizing devices, two birefringent devices and two image sensor devices with two linearly polarizing devices or two polarization image sensor devices, or one image sensor device with a linearly polarizing device and a polarization image sensor device, in accordance with an exemplary embodiment of the invention.
Figure 4 schematically illustrates an optical system comprising a microscope and an apparatus for optical imaging of a transparent or semi-transparent sample comprising a polarizing beam splitting device, two birefringent devices and two polarization image sensor devices in accordance with an exemplary embodiment of the invention.

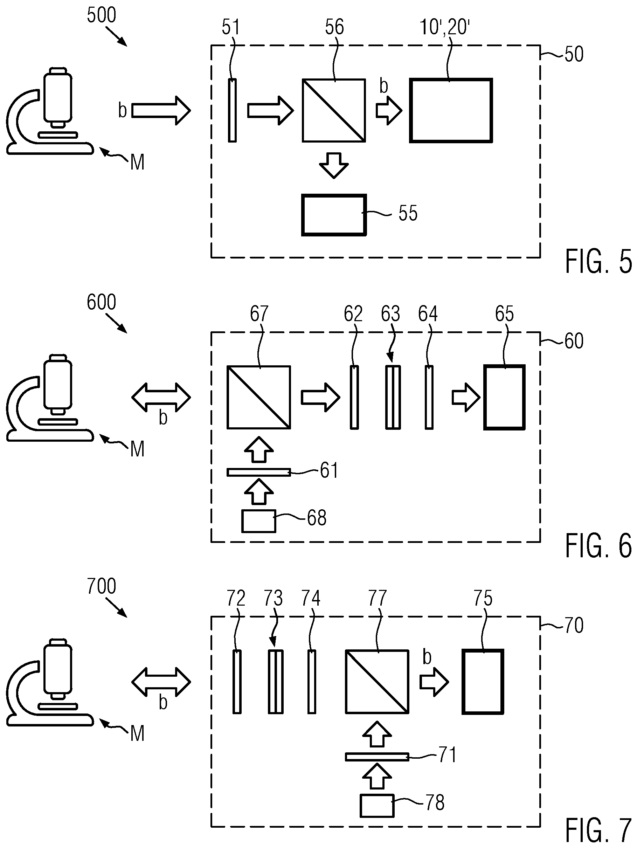

Figure 5 schematically illustrates an optical system comprising a microscope and an apparatus for optical imaging of a transparent or semi-transparent sample comprising a beam splitting device, a birefringent device, and two image sensor devices and one polarization device, or an image sensor device and a polarization image sensor device in accordance with an exemplary embodiment of the invention.
Figure 6 schematically illustrates an optical system comprising a microscope and an apparatus for optical imaging of a reflective or semi-reflective sample comprising an external light source, a beam splitting device, two polarizing devices, a birefringent device, and an image sensor device in accordance with an exemplary embodiment of the invention.
Figure 7 schematically illustrates an optical system comprising a microscope and an apparatus for optical imaging of a reflective or semi-reflective sample comprising an external light source, a beam splitting device, two polarizing devices, a birefringent device, and an image sensor device in accordance with another exemplary embodiment of the invention.

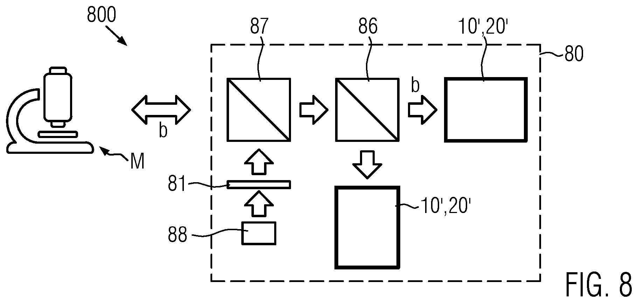

Figure 8 schematically illustrates an optical system comprising a microscope and an apparatus for optical imaging of a reflective or semi-reflective sample comprising an external light source, two beam splitting devices, two polarizing devices two birefringent devices and two image sensor devices with two linearly polarizing devices, or two polarization image sensor devices, or one image sensor device with a linearly polarizing device and a polarization image sensor device, in accordance with another exemplary embodiment of the invention.

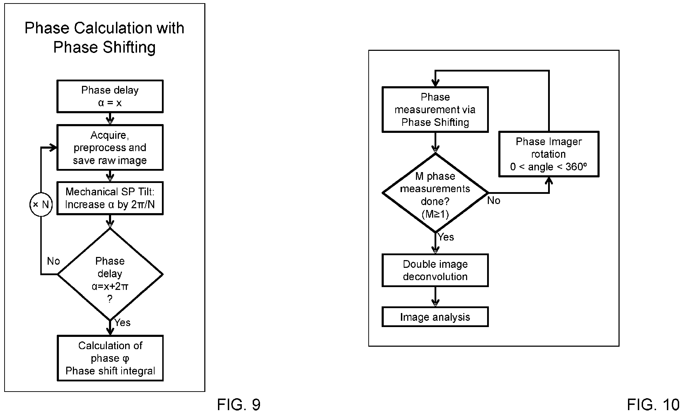

Figure 9 illustrates a procedure of phase calculation.
Figure 10 illustrates a procedure of image processing.

### Description of specific embodiments of the invention

The present invention provides an optical system comprising an apparatus for optical imaging of a transparent or semi-transparent sample or a reflective or semi-reflective sample based on the optical phase information and a microscope configured for illuminating the sample.

For illustration purposes, the following detailed description refers to an optical system comprising the inventive apparatus and a microscope. Any other suitable optical device might be used instead of the microscope. The apparatus may be operated in combination with or may comprise a light source illuminating a sample under investigation.

Figure 1 schematically illustrates an optical system 100 comprising a microscope M and an apparatus 10 for optical imaging of a sample in accordance with an exemplary embodiment of the invention. Here and in the embodiments described below the microscope M holds a sample that is to be investigated and any other suitable optical device can be used instead of the microscope M. The sample may be a biological, chemical and/or medical sample comprising, for instance, biological cells and/or bio-layers, for example, protein layers. The sample is fully or partially transparent or (partially) reflective. The microscope M comprises a light source for illuminating the sample. The light coming from the light source is transmitted through or reflected by the sample and afterwards is output by a light port of the microscope M towards the apparatus 10 as a light beam b comprising information on the sample.

The apparatus 10 comprises a spectral filter 11 in the case that the temporal coherence provided by the light source of the microscope M providing the illumination light is too low for interferometric measurements. The spectral filter, for example, may have a central wavelength of 400 nm to 900 nm and a bandwidth of 1 nm to 50 nm. After having passed the spectral filter 11 the light beam passes a linear polarizer (polarizing device) 12 for linearly polarizing the light beam b. The linearly polarized light beam is split by a birefringent device 13 into a pair of sheared light beams that after polarization by another linear polarizer 14 is detected by an image sensor device 15, for example, a charge-coupled device (CCD) or a complementary metal-oxide-semiconductor (CMOS, sCMOS, eeCMOS) detector, in order to obtain a phase image or interferogram. The other linear polarizer 14 may be oriented to exhibit a polarization plane perpendicular or parallel to the polarization plane of the linear polarizer 12 which may be oriented with the bisector of the angle between the ordinary and extraordinary polarization axes of the birefringent device 13 in the transverse plane perpendicular to the travelling direction of the light beam.

The birefringent device 13 may be a Savart plate that is composed of two birefringent crystals, for example, quartz or calcite crystals (or glasses or polymer materials, for example). The birefringent device 13 may displace the travelling direction of the extraordinary beam component of the polarized beam provided by the linear polarizer 12 with respect to the ordinary beam component of the same. The amount of displacement depends on the shape and material of the birefringent device 13 as well as a tilt angle of the (for example, one or more optical axes of the) birefringent device 13 with respect to the transverse plane perpendicular to the travelling direction of the light beam (i.e. an angle of a tilt around one of the perpendicular axis being orientated perpendicular to the travelling direction of the light beam). However, according to particular embodiments, it might be preferred to operate in a regime in that the effect of a finite tilt angle on the shear magnitude can be neglected.

The image sensor devices comprised in the apparatuses in the embodiments described below may be similar to the image sensor device 15 of apparatus 10. The birefringent devices comprised in the apparatuses in the embodiments described below may be similar to birefringent device 13 of apparatus 10.

Figure 2 schematically illustrates an optical system 200 comprising a microscope M as described above and an apparatus 20 for optical imaging of a sample in accordance with another exemplary embodiment of the invention.

The apparatus 20 comprises an optional spectral filter 21 for filtering the light beam b coming from the microscope M. After having passed the spectral filter 21 the light beam passes a linear polarizer 22 for linearly polarizing the light beam b. The linearly polarized light beam is split by a birefringent device 23 into a pair of sheared light beams. Different from the embodiment illustrated in Figure 1 a polarization image sensor device 25 comprising a polarizer is provided for obtaining the image data. For example, the polarization image sensor device 25 comprises an array of linear polarizers at different orientations, an array of liquid crystal polarizers or a rotating polarizer. Provision of the polarization image sensor device 25 rather than a separate linear polarizer 14 and a separate image sensor device 15 as in the embodiment shown in Figure 1 may accelerate operation of the apparatus 20 as compared to the apparatus 10.

In operation, one might obtain a first phase image with a first orientation of the birefringent device 13 or 23, respectively, and a second phase image with a second orientation of the birefringent device 13 or 23, respectively, that is different from the first orientation. For example, the second phase image may be obtained after rotation of the birefringent device 13 or 23, respectively, around the beam propagation axis by an angle of ±90°. A final phase image can subsequently be obtained based on the first and second phase images wherein the final phase image is free of a differential (double image) effect that affects image quality, particularly, for samples consisting of one or more (semi-)transparent cells. Rather than rotating the birefringent device 13 or 23, respectively, the entire configuration consisting of the polarizer 12, the birefringent device 13, the polarizer 14 and the image sensor device 15 or the polarizer 22, the birefringent device 23 and the polarization image sensor device 25, respectively, may be rotated to obtain the second phase image.

This rotation procedure can be avoided when using an apparatus as illustrated in Figure 3. Figure 3 shows an optical system 300 comprising a microscope M as described above and an apparatus 30 for optical imaging of a sample in accordance with another exemplary embodiment of the invention. The apparatus 30 comprises an optional spectral filter 31 and a beam splitting device 36 for splitting the light beam b provided by the microscope M into two light beams. The light beam that passed the beam splitting device 36 in the horizontal direction in Figure 3 and the corresponding Figures illustrating configurations with beam splitting devices described below is also designated by the letter b for simplicity (the horizontal beam b leaving the beam splitting device 36 shown in Figure 3 is processed similar to the beam b shown in Figures 1 and 2). The respective light beams resulting from the splitting procedure can be processed by an apparatus 10' that only differs from apparatus 10 shown in Figure 1 in that definitely no spectral filter 11 is provided or by an apparatus 20' that only differs from apparatus 20 shown in Figure 2 in that definitely no spectral filter 21 is provided. In this context, it is noted that in all embodiments described herein one or more spectral filters may be provided wherever it is considered appropriate along the optical paths. Thus, processing of the two beams resulting from the splitting procedure can be done by two image sensor devices with two linearly polarizing devices or two polarization image sensor devices, or one image sensor device with a linearly polarizing device and a polarization image sensor device, in accordance with an exemplary embodiment of the invention.

For example, a birefringent device comprised in the apparatus 10', 20' receiving a light beam passing the beam splitting device 36 to the right in Figure 3 can be arranged for providing horizontal shear (displacement along a horizontally oriented axis in the plane oriented transversely to the travelling direction of the light beam) and the birefringent device comprised in the apparatus 10', 20' receiving a light beam reflected by the beam splitting device 36 to the bottom in Figure 3 can be arranged for providing vertical shear (displacement along a vertically oriented axis in the plane oriented transversely to the travelling direction of the light beam) or horizontal shear with a different shear distance as that provided by the birefringent device comprised in the apparatus 10', 20' receiving the light beam passing the beam splitting device 36 to the right in Figure 3. Thus, a first and a second phase image can be obtained at the same time for generating a final phase image that is free of a differential (double image) effect. Therefore, generating the final phase image is easier and faster when using the apparatus 30 shown in Figure 3 than when using the apparatus 10 shown in Figure 1 or the apparatus 20 shown in Figure 2 since no mechanical rotation is necessary.

Rather than providing a beam splitting device 36 shown in Figure 3 a polarizing beam splitting device might be used. Figure 4 shows an optical system 400 comprising a microscope M as described above and an apparatus 40 for optical imaging of a sample in accordance with another exemplary embodiment of the invention. The apparatus 40 comprises an optional spectral filter 41 and a polarizing beam splitting device 46 for splitting and polarizing the light beam b provided by the microscope M. One of the resulting polarized light beams is processed by a first birefringent device 43a and the other one of the resulting polarized light beams is processed by a second birefringent device 43b. The first birefringent device 43a provides a first pair of sheared light beams that is detected by a first polarization image sensor device 45a and the second birefringent device 43b provides a second pair of sheared light beams that is detected by a second polarization image sensor device 45b. The first and/or second polarization image sensor devices 45a, 45b may be arranged directly behind the first/second birefringent device 43a, 43b without further optical elements therebetween. The first and/or second polarization image sensor devices 45a, 45b may be, respectively, replaced by a separate linear polarizer and image sensor device, respectively (as in the configuration shown in Figure 1).

Another embodiment of an inventive optical system 500 comprising a microscope M and an apparatus for optical imaging 50 is shown in Figure 5. The apparatus 50 comprises an optional spectral filter 51 and a beam splitting device 56 for splitting the light beam b provided by the microscope M into two light beams. One of these light beams is processed by an apparatus 10' that only differs from apparatus 10 shown in Figure 1 in that definitely no spectral filter 11 is provided or by an apparatus 20' that only differs from apparatus 20 shown in Figure 1 in that definitely no spectral filter 21 is provided. The other one of these light beams provided by the beam splitting device 56 is directly detected by an image sensor device 55 or polarization image sensor device 55. The information obtained by the image sensor device or the polarization image sensor device comprised in apparatus 10' or 20', respectively, can be used together with numerical holographic algorithms to calculate the phase and transmission of the beams in combination with the information provided by the image sensor device 55 or polarization image sensor device 55, respectively.

Figures 6 to 8 illustrate embodiments of an apparatus for optical imaging and an imaging optical system comprising the same for the investigation of (semi-)reflective rather than (semi-)transparent samples. In this case, the light beam processed by the apparatus represents light reflected by the sample. For example, the sample may be positioned in a microscope, for instance, the microscope M shown in Figures 1 to 5. Illumination of the sample is performed by a light source external from the microscope M. Alternatively, in the embodiments shown in Figures 6 to 8 the sample may be positioned on any other sample support rather than a sample support of a microscope or other optical device that may replace the microscope M shown in Figures 1 to 5.

In the embodiment illustrated in Figure 6 the optical system 600 comprises a microscope M and an apparatus 60 for optical imaging. Similar to the embodiment illustrated in Figure 1 the apparatus 60 also comprises an optional spectral filter 61, a linear polarizer 62 ahead of a birefringent device 63, another linear polarizer 64 behind the birefringent device 63 and an image sensor device 65 for detecting the pair of sheared light beams provided by the birefringent device 63 and after polarization of that pair of sheared light beams by the other linear polarizer 64. The image sensor device 65 may be arranged directly behind the other linear polarizer 64 without further optical elements therebetween. Further, the apparatus 60 comprises a beam splitting device 67 and a light source 68. Alternatively, the light source 68 is not part of the apparatus 60 but provided outside of the same. In any case, light emitted by the light source 68 is reflected by the beam splitting device 67 towards a sample under investigation positioned in the microscope M. The optional spectral filter 61 may be positioned ahead of or behind the beam splitting device 67. The light beam reflected from the sample passes the beam splitting device 67 and is processed by the linear polarizer 62, the birefringent device 63, the linear polarizer 64 and the image sensor device 65 as described with reference to the embodiment illustrated in Figure 1.

Figure 7 shows an alternative embodiment to the one shown in Figure 6. The optical system shown in Figure 7 comprises a microscope M and an apparatus 70 for optical imaging. The apparatus 70 comprises an optional spectral filter 71, a linear polarizer 72 ahead of a birefringent device 73, another linear polarizer 74 behind the birefringent device 73 and an image sensor device 75 for detecting the pair of sheared light beams provided by the birefringent device 73 and after polarization of that pair of sheared light beams by the other linear polarizer 74. Further, the apparatus 70 comprises a beam splitting device 77 and a light source 78. Alternatively, the light source 78 is not part of the apparatus 70 but is provided outside of the same. The image sensor device 75 may be arranged directly behind the beam splitting device 77 without further optical elements therebetween.

Different from the embodiment shown in Figure 6, in the apparatus 70 shown in Figure 7 the beam splitting device 77 is arranged between the linear polarizer 74 that is positioned behind the birefringent device 73 and the image sensor device 75. Thus, light emitted by the light source 78 is reflected to the sample positioned in the microscope M through the other linear polarizer 74 behind the birefringent device 73, the birefringent device 73 and the linear polarizer 72 ahead of the birefringent device 73. A light beam reflected by the sample passes this configuration in the opposite direction.

Instead of the components 62, 63, 64 and 65 of the apparatus 60 and instead of the components 72, 73, 74 and 75 of the apparatus 70 the corresponding components of the apparatuses of any of the embodiments illustrated in Figures 2 to 4 may suitably be used in the apparatus 60 shown in Figure 6 and the apparatus 70 shown in Figure 7, respectively. For example, Figure 8 illustrates an embodiment wherein an apparatus 80 for optical imaging of an optical system 800 comprising the apparatus 80 and a microscope M comprises an optional spectral filter 81, a light source 88 (which, alternatively, may be positioned outside of the apparatus 80) and a beam splitting device 87 for reflecting light emitted by the light source 88 towards a sample positioned in the microscope M and for passing a light beam reflected by the sample.

Similar to the embodiment illustrated in Figure 3 the apparatus 80 comprises a beam splitting device 86 for splitting the light beam comprising the information on the sample into two light beams. The respective light beams resulting from the splitting procedure can be processed by an apparatus 10' that only differs from apparatus 10 shown in Figure 1 in that definitely no spectral filter 11 is provided or by an apparatus 20' that only differs from apparatus 20 shown in Figure 2 in that definitely no spectral filter 21 is provided.

Thus, processing of the two beams resulting from the splitting procedure can be done by two image sensor devices with two linearly polarizing devices, or two polarization image sensor devices, or one image sensor device with a linearly polarizing device and a polarization image sensor device.

In all of the above-described embodiments a quarter waveplate may be placed after the birefringent device(s) in order to enhance sensitivity. Alternatively, the birefringent device(s) may be tilted to enhance the contrast of the interferogram(s) obtained by the image sensor device(s). Furthermore, by acquiring and processing the interferograms at several tilting angles of the birefringent device(s), for example using the algorithm described in the paper by R. Terborg et al., entitled "Ultrasensitive interferometric on-chip microscopy of transparent objects", Science Advances 2016; 2: e1600077, 10 June 2016, it is possible to obtain a quantitative phase image with even higher quality.

In the following some details of phase calculation procedures and image processing that can be carried out in the context of the operation of the optical systems described above are described. Optical imaging of a transparent or semi-transparent sample or a reflective or semi-reflective sample is based on the optical phase information provided by means of the optical systems described above.

Figure 9 illustrates a procedure of phase calculation that might be involved in the overall operation of the optical system 100 illustrated in Figure 1. Starting from an initial tilt angle of the (for example, one or more optical axes of the) birefringent device 13 with respect to the transverse plane perpendicular to the travelling direction of the light beam (i.e. an angle of a tilt around one of the perpendicular axis being orientated perpendicular to the travelling direction of the light beam) corresponding to a phase delay α of say α = x, a series of N+1 interferograms is captured by the image sensor device 15, wherein N may be an integer in the range of 4 to 50, for example, by tilting the birefringent device 13 with respect to the transverse plane perpendicular to the travelling direction of the light beam in N steps corresponding to incremental phase delays 2π/N, such that the last obtained interferogram corresponds to a phase delay of α = x + 2π (see Figure 9). The N+1 interferograms can be analyzed by means of the phase-shift integral algorithm taught by R. Terborg et al. in the paper cited above.

In the optical system 200 illustrated in Figure 2 a polarization image sensor device 25 is used for capturing images. Such a polarization image sensor device 25 may comprise alternating arrays of pixeled linear polarizers at angles of 0°, 45°, 90° and 135° with respect to some pre-defined reference coordinate system. Thus, a single capture is separated into four images (according to the polarization angles) P0(i,j), P45(i,j), P90(i,j) and P135(i,j), where (i,j) identifies each pixel, that are processed to obtain the phase information φ by $φ = {sin}^{- 1} \left(\left(P0-P90\right)/\left(2*{\left(P45*P135\right)}^{1 / 2}\right)\right)$ when (the direction of the shear of) the birefringent device 13 and the linear polarizer 14 are aligned at 0°.

If an additional quarter waveplate is provided, the phase information φ is obtained by $φ = {tan}^{- 1} \left(\left(P0-P90\right)/\left(P45-P135\right)\right)$ when (the direction of the shear of) the birefringent device 13, the linear polarizer 14 and the additional quarter waveplate are aligned at 0°.

Note that the previous operations are performed for any pixel (i,j).

As taught by R. Terborg et al. in the paper cited above, the transmission of the sample can be calculated from the same interferograms, independent of the phases, in order to have the amplitudes and phases of the optical field, which can be post-processed with holographic techniques, like optical wave propagation calculations, for example, in order to numerically re-focus different planes of the measured sample and perform the optical sectioning needed.

As already mentioned double images resulting from the differential nature of the image acquisition techniques may be removed by post-processing algorithms. Figure 10 illustrates image processing for obtaining a phase image without the differential effect in the context of the operation of the optical systems 100 and 200 shown in Figures 1 and 2, respectively.

After M phase measurements have been obtained based on phase shifting due to different tilt angles of the birefringent device 13 or the birefringent device 23, respectively, (see description above), double image deconvolution can be performed in order to receive the final image used for the further image analysis. In embodiments comprising two apparatuses for optical imaging (see Figures 3, 4, 5, 7 and 8) the phases can be reconstructed based on the provided two different image outputs with different shear vectors (i.e., directions and magnitudes) provided by the two apparatuses.

The double image deconvolution may comprise modelling a shearing and imaging transfer function (for example, approximated by two delta functions) and Wiener deconvolution as known in the art. Images resulting from different shear vectors can be combined into a final image that is rid of the differential effect.

Further image analysis can be done for the final image, including but not limited to: feature recognition, topography and refractive index calculation, dry mass estimation, mobility, viability, etc.

All previously discussed embodiments are not intended as limitations but serve as examples illustrating features and advantages of the invention. It is to be understood that some or all of the above-described features can also be combined in different ways.

### Acknowledgement

This work was supported by the public funding from the European Union's Horizon 2020 research and innovation programme under grant agreement No 101034765: FET Open "LIM Large area interferometric imager for highly sensitive inspection of materials".

## Claims

1. An optical system (100, 200, 300, 400, 500, 600, 700, 800) comprising
(i) an apparatus (10, 20, 30, 40, 50, 60, 70, 80) for optical imaging of a sample, the apparatus (10, 20, 30, 40, 50, 60, 70, 80) comprising
a first polarizing device (12, 22, 62, 72) configured for linearly polarizing a first light beam coming (b) from the sample to obtain first linearly polarized light;
a first birefringent device (13, 23, 43a, 63, 73), in particular, a first Savart plate, configured for splitting the first linearly polarized light obtained by the first polarizing device (12, 22, 62, 72) into a first pair of sheared light beams; and
a first image sensor device (15, 65, 75) configured for detecting the first pair of sheared light beams obtained by the first birefringent device (13, 23, 43a, 63, 73) to obtain a phase image of the sample; and **characterized in that** said optical system further comprises
ii) a microscope (M), comprising a light source configured for emitting light through the sample to obtain the first light beam (b).

2. The optical system (100, 200, 300, 400, 500, 600, 700, 800) according to claim 1, wherein the apparatus (10, 20, 30, 40, 50, 60, 70, 80) further comprises a second polarizing device (14, 64, 74) configured for linearly polarizing the first pair of sheared light beams obtained by the first birefringent device (13, 23, 43a, 63, 73) before detection by the first image sensor device (15, 65, 75).

3. The optical system (100, 200, 300, 400, 500, 600, 700, 800) according to claim 1, wherein the first image sensor device is a first polarization image sensor device (25, 45a) comprising a first polarizing component configured for polarizing the first pair of sheared light beams obtained by the first birefringent device (13, 23, 43a, 63, 73).

4. The optical system (100, 200, 300, 400, 500, 600, 700, 800) according to one of the preceding claims, wherein the apparatus (10, 20, 30, 40, 50, 60, 70, 80) further comprises
a beam splitting device (36, 56, 86) configured for splitting light coming from the sample into the first light beam (b) and a second light beam;
a third polarizing device configured for linearly polarizing the second light beam to obtain second linearly polarized light;
a second birefringent device, in particular, a second Savart plate, configured for splitting the second linearly polarized light obtained by the third polarizing device into a second pair of sheared light beams; and
a second image sensor device configured for detecting the second pair of sheared light beams obtained by the second birefringent device to obtain a phase image of the sample.

5. The optical system (100, 200, 300, 400, 500, 600, 700, 800) according to claim 4, wherein the apparatus (10, 20, 30, 40, 50, 60, 70, 80) further comprises a fourth polarizing device configured for polarizing the second pair of sheared light beams obtained by the second birefringent device before detection by the second image sensor device.

6. The optical system (100, 200, 300, 400, 500, 600, 700, 800) according to claim 4, wherein the second image sensor device is a second polarization image sensor device comprising a second polarizing component configured for polarizing the second pair of sheared light beams obtained by the second birefringent device.

7. The optical system (100, 200, 300, 400, 500, 600, 700, 800) according to one of the claims 1 to 3, wherein the first polarizing device (12, 22) is a polarizing beam splitting device (46) configured for splitting light coming from the sample into the first light beam (b) and a second light beam and linearly polarizing the second light beam;
and wherein the apparatus (10, 20, 30, 40, 50, 60, 70, 80) further comprises
a second birefringent device (43b) configured for splitting the second linearly polarized light obtained by the polarizing beam splitting device (46) into a second pair of sheared light beams; and
a second image sensor device configured for detecting the second pair of sheared light beams obtained by the second birefringent device (43b) to obtain a phase image of the sample.

8. The apparatus optical system (100, 200, 300, 400, 500, 600, 700, 800) according to claim 7, wherein the apparatus (10, 20, 30, 40, 50, 60, 70, 80) further comprises a fourth polarizing device configured for polarizing the second pair of sheared light beams obtained by the second birefringent device (43b) before detection by the second image sensor device.

9. The optical system (100, 200, 300, 400, 500, 600, 700, 800) according to claim 7, wherein the second image sensor device is a second polarization image sensor device (45b) comprising a second polarizing component configured for polarizing the second pair of sheared light beams obtained by the second birefringent device (43b).

10. The optical system (100, 200, 300, 400, 500, 600, 700, 800) according to one of the claims 1 to 3, wherein the apparatus (10, 20, 30, 40, 50, 60, 70, 80) further comprises
a beam splitting device (56) configured for splitting light coming from the sample into the first light beam and a second light beam; and
a second image sensor device (55) configured for detecting the second light beam to obtain a phase image of the sample.

11. The optical system (100, 200, 300, 400, 500, 600, 700, 800) according to one of the preceding claims, further comprising a light source (68, 78, 88) external to the microscope configured for emitting light and another beam splitting device (67, 77, 87) configured for directing the light emitted by the light source external to the microscope towards the sample positioned in the microscope and wherein the first light beam represents light emitted by the light source external to the microscope towards the sample and reflected by the sample.

12. Method of monitoring living biological cells, comprising
providing a sample of the living biological cells;
imaging the sample by means of the optical system (100, 200, 300, 400, 500, 600, 700, 800) according to one of the preceding claims; and
analyzing one or more biological parameters or qualities or quantities of the biological cells of the sample based on the imaging.

13. Method of examining a substrate, in particular, a substrate usable for cell growth or cell imaging, comprising
imaging the substrate by means of the optical system (100, 200, 300, 400, 500, 600, 700, 800) according to one of the claims 1 to 11; and
analyzing one or more parameters or qualities or quantities of the substrate based on the imaging.

## Patentansprüche

1. Ein optisches System (100, 200, 300, 400, 500, 600, 700, 800), umfassend
(i) eine Vorrichtung (10, 20, 30, 40, 50, 60, 70, 80) zur optischen Bildgebung einer Probe, wobei die Vorrichtung (10, 20, 30, 40, 50, 60, 70, 80) umfasst
eine erste Polarisationsvorrichtung (12, 22, 62, 72), die dazu ausgebildet ist, einen ersten Lichtstrahl, der (b) von der Probe kommt, linear zu polarisieren, um erstes linear polarisiertes Licht zu erhalten;
eine erste doppelbrechende Vorrichtung (13, 23, 43a, 63, 73), insbesondere eine erste Savart-Platte, die dazu ausgebildet ist, das von der ersten Polarisationsvorrichtung (12, 22, 62, 72) erhaltene erste linear polarisierte Licht in ein erstes Paar von verscherten Lichtstrahlen aufzuteilen; und
eine erste Bildsensorvorrichtung (15, 65, 75), die dazu ausgebildet ist, das erste Paar von verscherten Lichtstrahlen zu erfassen, das durch die erste doppelbrechende Vorrichtung (13, 23, 43a, 63, 73) erhalten wird, um ein Phasenbild der Probe zu erhalten; und **dadurch gekennzeichnet, dass** das optische System weiterhin umfasst
ii) ein Mikroskop (M), das eine Lichtquelle umfasst, die so ausgebildet ist, dass sie Licht durch die Probe emittiert, um den ersten Lichtstrahl (b) zu erhalten.

2. Das optische System (100, 200, 300, 400, 500, 600, 700, 800) nach Anspruch 1, wobei die Vorrichtung (10, 20, 30, 40, 50, 60, 70, 80) weiterhin eine zweite Polarisationsvorrichtung (14, 64, 74) umfasst, die dazu ausgebildet ist, das erste Paar von verscherten Lichtstrahlen, die durch die erste doppelbrechende Vorrichtung (13, 23, 43a, 63, 73) erhalten werden, vor der Erfassung durch die erste Bildsensorvorrichtung (15, 65, 75) linear zu polarisieren.

3. Das optische System (100, 200, 300, 400, 500, 600, 700, 800) nach Anspruch 1, wobei die erste Bildsensorvorrichtung eine erste Polarisationsbildsensorvorrichtung (25, 45a) ist, die eine erste Polarisationskomponente umfasst, die dazu ausgebildet ist, das erste Paar von verscherten Lichtstrahlen, die durch die erste doppelbrechende Vorrichtung (13, 23, 43a, 63, 73) erhaltenen werden, zu polarisieren.

4. Das optische System (100, 200, 300, 400, 500, 600, 700, 800) nach einem der vorstehenden Ansprüche, wobei die Vorrichtung (10, 20, 30, 40, 50, 60, 70, 80) weiterhin umfasst
eine Strahlteilervorrichtung (36, 56, 86), die so ausgebildet ist, dass sie das von der Probe kommende Licht in den ersten Lichtstrahl (b) und einen zweiten Lichtstrahl aufteilt;
eine dritte Polarisationsvorrichtung, die so ausgebildet ist, dass sie den zweiten Lichtstrahl linear polarisiert, um zweites linear polarisiertes Licht zu erhalten;
eine zweite doppelbrechende Vorrichtung, insbesondere eine zweite Savart-Platte, die dazu ausgebildet ist, das durch die dritte Polarisationsvorrichtung erhaltene zweite linear polarisierte Licht in ein zweites Paar von verscherten Lichtstrahlen aufzuteilen; und
eine zweite Bildsensorvorrichtung, die dazu ausgebildet ist, das durch die zweite doppelbrechende Vorrichtung erhaltene zweite Paar von verscherten Lichtstrahlen zu erfassen, um ein Phasenbild der Probe zu erhalten.

5. Das optische System (100, 200, 300, 400, 500, 600, 700, 800) nach Anspruch 4, wobei die Vorrichtung (10, 20, 30, 40, 50, 60, 70, 80) weiterhin eine vierte Polarisationsvorrichtung umfasst, die dazu ausgebildet ist, das zweite Paar verscherten Lichtstrahlen, die durch die zweite doppelbrechende Vorrichtung erhalten werden, vor der Erfassung durch die zweite Bildsensorvorrichtung zu polarisieren.

6. Das optische System (100, 200, 300, 400, 500, 600, 700, 800) nach Anspruch 4, wobei die zweite Bildsensorvorrichtung eine zweite Polarisationsbildsensorvorrichtung ist, die eine zweite Polarisationskomponente umfasst, die dazu ausgebildet ist, das zweite Paar von durch die zweite doppelbrechende Vorrichtung erhaltenen verscherten Lichtstrahlen zu polarisieren.

7. Das optische System (100, 200, 300, 400, 500, 600, 700, 800) gemäß einem der Ansprüche 1 bis 3, wobei die erste Polarisationsvorrichtung (12, 22) eine polarisierende Strahlteilervorrichtung (46) ist, die dazu ausgebildet ist, von der Probe kommendes Licht in den ersten Lichtstrahl (b) und einen zweiten Lichtstrahl zu teilen und den zweiten Lichtstrahl linear zu polarisieren;
und wobei die Vorrichtung (10, 20, 30, 40, 50, 60, 70, 80) weiterhin umfasst
eine zweite doppelbrechende Vorrichtung (43b), die so ausgebildet ist, dass sie das durch die polarisierende Strahlteilervorrichtung (46) erhaltene zweite linear polarisierte Licht in ein zweites Paar von verscherten Lichtstrahlen aufteilt; und
eine zweite Bildsensorvorrichtung, die so ausgebildet ist, dass sie das durch die zweite doppelbrechende Vorrichtung (43b) erhaltene zweite Paar von verscherten Lichtstrahlen erfasst, um ein Phasenbild der Probe zu erhalten.

8. Das optische System (100, 200, 300, 400, 500, 600, 700, 800) gemäß Anspruch 7, wobei die Vorrichtung (10, 20, 30, 40, 50, 60, 70, 80) weiterhin eine vierte Polarisationsvorrichtung umfasst, die dazu ausgebildet ist, das zweite Paar von durch die zweite doppelbrechende Vorrichtung (43b) erhaltenen verscherten Lichtstrahlen vor der Erfassung durch die zweite Bildsensorvorrichtung zu polarisieren.

9. Das optische System (100, 200, 300, 400, 500, 600, 700, 800) nach Anspruch 7, wobei die zweite Bildsensorvorrichtung eine zweite Polarisationsbildsensorvorrichtung (45b) ist, die eine zweite Polarisationskomponente umfasst, die dazu ausgebildet ist, das zweite Paar von durch die zweite doppelbrechende Vorrichtung (43b) erhaltenen verscherten Lichtstrahlen zu polarisieren.

10. Das optische System (100, 200, 300, 400, 500, 600, 700, 800) nach einem der Ansprüche 1 bis 3, wobei die Vorrichtung (10, 20, 30, 40, 50, 60, 70, 80) weiterhin umfasst
eine Strahlteilervorrichtung (56), die dazu ausgebildet ist, von der Probe kommendes Licht in den ersten Lichtstrahl und einen zweiten Lichtstrahl aufzuteilen; und
eine zweite Bildsensorvorrichtung (55), die dazu ausgebildet ist, den zweiten Lichtstrahl zu erfassen, um ein Phasenbild der Probe zu erhalten.

11. Das optische System (100, 200, 300, 400, 500, 600, 700, 800) nach einem der vorstehenden Ansprüche, das weiterhin eine außerhalb des Mikroskops angeordnete Lichtquelle (68, 78, 88), die zum Emittieren von Licht ausgebildet ist, und eine weitere Strahlteilervorrichtung (67, 77, 87) umfasst, die so ausgebildet ist, dass sie das von der außerhalb des Mikroskops befindlichen Lichtquelle emittierte Licht auf die im Mikroskop positionierte Probe richtet, und wobei der erste Lichtstrahl Licht darstellt, das von der außerhalb des Mikroskops befindlichen Lichtquelle in Richtung der Probe emittiert und von der Probe reflektiert wird.

12. Verfahren zur Überwachung lebender biologischer Zellen, umfassend:
Bereitstellen einer Probe der lebenden biologischen Zellen;
bildgebende Untersuchung der Probe mittels des optischen Systems (100, 200, 300, 400, 500, 600, 700, 800) gemäß einem der vorstehenden Ansprüche; und
Analysieren eines oder mehrerer biologischer Parameter oder Qualitäten oder Quantitäten der biologischen Zellen der Probe auf der Grundlage der bildgebenden Untersuchung.

13. Verfahren zur Untersuchung eines Substrats, insbesondere eines für das Zellwachstum oder die Zellabbildung verwendbaren Substrats, umfassend
bildgebende Untersuchung des Substrats mittels des optischen Systems (100, 200, 300, 400, 500, 600, 700, 800) gemäß einem der Ansprüche 1 bis 11; und
Analysieren eines oder mehrerer Parameter oder Qualitäten oder Quantitäten des Substrats auf der Grundlage der bildgebenden Untersuchung.

## Revendications

1. Système optique (100, 200, 300, 400, 500, 600, 700, 800) comprenant :
(i) un appareil (10, 20, 30, 40, 50, 60, 70, 80) pour l'imagerie optique d'un échantillon, l'appareil (10, 20, 30, 40, 50, 60, 70, 80) comprenant
un premier dispositif polarisant (12, 22, 62, 72) configuré pour polariser linéairement un premier faisceau lumineux (b) provenant de l'échantillon afin d'obtenir une première lumière polarisée linéairement ;
un premier dispositif biréfringent (13, 23, 43a, 63, 73), en particulier une première lame de Savart, configuré pour diviser la première lumière polarisée linéairement obtenue par le premier dispositif polarisant (12, 22, 62, 72) en une première paire de faisceaux lumineux cisaillés ; et
un premier dispositif capteur d'image (15, 65, 75) configuré pour détecter la première paire de faisceaux lumineux cisaillés obtenue par le premier dispositif biréfringent (13, 23, 43a, 63, 73) afin d'obtenir une image de phase de l'échantillon, et
**caractérisé en ce que** ledit système optique comprend en outre
ii) un microscope (M), comprenant une source de lumière configurée pour émettre de la lumière à travers l'échantillon afin d'obtenir le premier faisceau lumineux (b).

2. Système optique (100, 200, 300, 400, 500, 600, 700, 800) selon la revendication 1, dans lequel
l'appareil (10, 20, 30, 40, 50, 60, 70, 80) comprend en outre un deuxième dispositif polarisant (14, 64, 74) configuré pour polariser linéairement la première paire de faisceaux lumineux cisaillés obtenue par le premier dispositif biréfringent (13, 23, 43a, 63, 73) avant détection par le premier dispositif capteur d'image (15, 65, 75).

3. Système optique (100, 200, 300, 400, 500, 600, 700, 800) selon la revendication 1, dans lequel
le premier dispositif capteur d'image est un premier dispositif capteur d'image à polarisation (25, 45a) comprenant un premier composant polarisant configuré pour polariser la première paire de faisceaux lumineux cisaillés obtenue par le premier dispositif biréfringent (13, 23, 43a, 63, 73).

4. Système optique (100, 200, 300, 400, 500, 600, 700, 800) selon l'une des revendications précédentes, dans lequel l'appareil (10, 20, 30, 40, 50, 60, 70, 80) comprend en outre
un dispositif de division de faisceau (36, 56, 86) configuré pour diviser la lumière provenant de l'échantillon en le premier faisceau lumineux (b) et un deuxième faisceau lumineux ;
un troisième dispositif polarisant configuré pour polariser linéairement le deuxième faisceau lumineux afin d'obtenir une deuxième lumière polarisée linéairement ;
un deuxième dispositif biréfringent, en particulier une deuxième lame de Savart, configuré pour diviser la deuxième lumière polarisée linéairement obtenue par le troisième dispositif polarisant en une deuxième paire de faisceaux lumineux cisaillés ; et
un deuxième dispositif capteur d'image configuré pour détecter la deuxième paire de faisceaux lumineux cisaillés obtenue par le deuxième dispositif biréfringent afin d'obtenir une image de phase de l'échantillon.

5. Système optique (100, 200, 300, 400, 500, 600, 700, 800) selon la revendication 4, dans lequel
l'appareil (10, 20, 30, 40, 50, 60, 70, 80) comprend en outre un quatrième dispositif polarisant configuré pour polariser la deuxième paire de faisceaux lumineux cisaillés obtenue par le deuxième dispositif biréfringent avant détection par le deuxième dispositif capteur d'image.

6. Système optique (100, 200, 300, 400, 500, 600, 700, 800) selon la revendication 4, dans lequel
le deuxième dispositif capteur d'image est un deuxième dispositif capteur d'image à polarisation comprenant un deuxième composant polarisant configuré pour polariser la deuxième paire de faisceaux lumineux cisaillés obtenue par le deuxième dispositif biréfringent.

7. Système optique (100, 200, 300, 400, 500, 600, 700, 800) selon l'une des revendications 1 à 3,
dans lequel le premier dispositif polarisant (12, 22) est un dispositif de division de faisceau polarisant (46) configuré pour diviser la lumière provenant de l'échantillon en le premier faisceau lumineux (b) et un deuxième faisceau lumineux et pour polariser linéairement le deuxième faisceau lumineux ; et
dans lequel l'appareil (10, 20, 30, 40, 50, 60, 70, 80) comprend en outre
un deuxième dispositif biréfringent (43b) configuré pour diviser la deuxième lumière polarisée linéairement obtenue par le dispositif de division de faisceau polarisant (46) en une deuxième paire de faisceaux lumineux cisaillés ; et
un deuxième dispositif capteur d'image configuré pour détecter la deuxième paire de faisceaux lumineux cisaillés obtenue par le deuxième dispositif biréfringent (43b) afin d'obtenir une image de phase de l'échantillon.

8. Système optique (100, 200, 300, 400, 500, 600, 700, 800) selon la revendication 7, dans lequel
l'appareil (10, 20, 30, 40, 50, 60, 70, 80) comprend en outre un quatrième dispositif polarisant configuré pour polariser la deuxième paire de faisceaux lumineux cisaillés obtenue par le deuxième dispositif biréfringent (43b) avant détection par le deuxième dispositif capteur d'image.

9. Système optique (100, 200, 300, 400, 500, 600, 700, 800) selon la revendication 7, dans lequel
le deuxième dispositif capteur d'image est un deuxième dispositif capteur d'image à polarisation (45b) comprenant un deuxième composant polarisant configuré pour polariser la deuxième paire de faisceaux lumineux cisaillés obtenue par le deuxième dispositif biréfringent (43b).

10. Système optique (100, 200, 300, 400, 500, 600, 700, 800) selon l'une des revendications 1 à 3, dans lequel l'appareil (10, 20, 30, 40, 50, 60, 70, 80) comprend en outre
un dispositif de division de faisceau (56) configuré pour diviser la lumière provenant de l'échantillon en le premier faisceau lumineux et un deuxième faisceau lumineux ; et
un deuxième dispositif capteur d'image (55) configuré pour détecter le deuxième faisceau lumineux afin d'obtenir une image de phase de l'échantillon.

11. Système optique (100, 200, 300, 400, 500, 600, 700, 800) selon l'une des revendications précédentes, comprenant en outre une source de lumière (68, 78, 88) externe au microscope configurée pour émettre de la lumière et un autre dispositif de division de faisceau (67, 77, 87) configuré pour diriger la lumière émise par la source de lumière externe au microscope vers l'échantillon positionné dans le microscope, et dans lequel le premier faisceau lumineux représente la lumière émise par la source de lumière externe au microscope vers l'échantillon et réfléchie par l'échantillon.

12. Procédé de surveillance de cellules biologiques vivantes, comprenant
la fourniture d'un échantillon desdites cellules biologiques vivantes ;
l'imagerie de l'échantillon au moyen du système optique (100, 200, 300, 400, 500, 600, 700, 800) selon l'une des revendications précédentes ; et
l'analyse d'un ou plusieurs paramètres, qualités ou quantités biologiques des cellules biologiques de l'échantillon sur la base de l'imagerie.

13. Procédé d'examen d'un substrat, en particulier d'un substrat utilisable pour la croissance cellulaire ou l'imagerie cellulaire, comprenant
l'imagerie du substrat au moyen du système optique (100, 200, 300, 400, 500, 600, 700, 800) selon l'une des revendications 1 à 11 ; et
l'analyse d'un ou plusieurs paramètres, qualités ou quantités du substrat sur la base de l'imagerie.
